# EUROPÄISCHE PATENTSCHRIFT

(11) **EP 2 447 795 B1**
(45) Veröffentlichungstag und Bekanntmachung des Hinweises auf die Patenterteilung: **30.04.2014**
(21) Anmeldenummer: 11186224.9
(22) Anmeldetag: 21.10.2011
(51) Int. Cl.: G05B 19/042

(54) **Vorrichtung zur Steuerung von Funktionseinrichtungen in Gebäuden**
System for controlling function devices in buildings
Système de commande de dispositifs de fonctionnement dans des bâtiments

(30) Priorität: 27.10.2010 DE 102010049471
(43) Veröffentlichungstag der Anmeldung: 02.05.2012
(73) Patentinhaber: homesystem S.A., 6637 Wasserbillig (LU)
(72) Erfinder: Barbedor, Patrick, 6637 Wasserbillig (LU)
(74) Vertreter: Kutsch, Bernd

(56) Entgegenhaltungen:
- DE-A1-102006 061 705
- DE-U1-202009 012 554
- US-A1- 2007 114 295

## Beschreibung

### Stand der Technik

Die Steuerung und/oder Kommunikation von Funktionseinrichtungen wie elektrischen Verbrauchern, d. h. insbesondere Versorgungseinheiten von Aktoren wie Lampen, Rolladen- oder Jalousiemotoren, Heizungsstellventilen, sonstige Stellmotoren, Fernseher, Waschmaschinen, Kücheninstallationen, Telefonanlagen, Türsprech-anlagen, Alarmanlagen oder Videoanlagen, in Gebäuden und/oder im Umfeld eines Gebäudes mittels einer zentralen Steuerungs- und/oder Regelungseinheit ist bekannt.

So beschreibt DE 299 12 385 U1 eine zentrale Haussteuerung für busfähige Teilnehmer in der Gebäudesystemtechnik, wobei die Teilnehmer über eine serielle digitale Datenleitung (Busleitung) unmittelbar mit einer programmierbaren Zentrale verbunden sind. Die Teilnehmer sind dabei Sensoren, Aktoren oder andere Teilnehmer wie Verbraucher. Als Eingabegerät ist eine graphische Benutzerschnittstelle in Form eines als Touchscreen-Bildschirm ausgestalteten LCD-Flachbildschirms vorgesehen.

Derartige Bussysteme haben den Nachteil, dass ihre Installation, insbesondere ihre nachträgliche Installation in einem bestehenden Gebäude, sehr aufwändig und kostenintensiv ist, da einerseits eine Vielzahl von Busleitungen im Gebäude verlegt werden und andererseits spezielle adressierbare Sensoren und/oder Schalt-elemente und Aktoren oder andere Verbraucher bzw. Teilnehmer eingesetzt werden müssen. Dies wird bereits in DE 299 12 385 U1 selbst erkannt, wo auch vorgeschlagen wird, die Bussignale nicht über separate Busleitungen zu führen, sondern sie der vorhandenen Netzleitung aufzuprägen und so an die Teilnehmer zu übermitteln. Dies löst zwar das Problem der Busleitungen, führt aber zu elektrischen Problemen, einer erhöhten Störanfälligkeit des Systems, und, vor allem, befreit nicht von der Notwendigkeit des Einsatzes teurer adressierbarer Teilnehmer, d. h. entsprechender Sensoren, Schaltelemente, Aktoren oder anderer elektrischer Verbraucher.

Die in DE 299 12 385 U1 bereits angedeuteten Nachteile werden auch in DE 199 43 450 A1 diskutiert, wo vorgeschlagen wird, statt zu installierender Busleitungen eine drahtlose Übertragung mittels HF-Signalen, Funksignalen, Infrarotsignalen oder Ultraschallsignalen von adressierbaren Sensor- und/oder adressierbaren Aktorsignalen an bzw. von der zentralen Steuereinrichtung vorzusehen. Die zentrale Steuereinrichtung ist dazu beispielsweise als Microcontroller mit A/D- und D/A-Umsetzer ausgestaltet und steht drahtlos mit Funktionseinrichtungen und Empfangsbaugruppen in Verbindung. Daneben ist dort vorgesehen, dass die Funktionseinrichtungen, die drahtlos mit der zentralen Steuereinrichtung kommunizieren, periodisch abfragen, ob zentrale Steuereinrichtung ordnungsgemäß arbeitet ("Polling") und, falls nicht, in einen von der Zentrale ungesteuerten Normalbetrieb übergehen.

Die Lösung gemäß DE 199 43 450 A1 verlangt den Einsatz sehr teurer Sensoren und Aktoren oder anderer elektrischer Verbraucher, da diese jeweils in der Lage sein müssen, drahtlos mit der Zentrale zu kommunizieren. Insbesondere kann dabei nicht auf preiswerte, handelsübliche Bauelemente in Gebäuden wie übliche Schalter oder Elektromotoren zurückgegriffen werden, sondern diese müssen drahtlos steuerbar und (digital) adressierbar sein.

In DE 10 2004 005 962 A1 wird ein anderer Weg zur Überwindung der in DE 199 43 450 A1 erkannten Nachteile von herkömmlichen Bussystemen beschrieben. Dort ist vorgesehen, dass von einer zentralen Steuerungs- und/oder Regelungseinheit einzeln ansteuerbare Versorgungseinheiten über sternförmig angeordnete separate Steuerleitungen auf 24-Volt-Basis mit der zentralen Einheit verbunden sind. Die zentrale Einheit ist dabei als normaler Verteilerkasten mit einer integrierten CPU ausgestaltet. Diese Lösung vermeidet zwar das Erfordernis des Einsatzes adressierbarer, über eine Busleitung oder Ethernet digital steuerbarer Versorgungseinheiten, d. h. erlaubt die Verwendung in dieser Hinsicht preiswerterer Versorgungseinheiten, allerdings erfordert diese Lösung wieder den Einbau neuer 24-Volt Steuerleitungen an alle Verbraucher, was insbesondere in bestehenden Gebäuden arbeits- und kostenintensiv ist. Daneben ist bei der Lösung gemäß DE 10 2004 005 962 A1 erforderlich, dass die angesteuerten Versorgungseinheiten über eine 24-Volt-Leitung steuerbar, selbst aber in das haushaltsübliche 230-Volt-Stromnetz integriert sein müssen, d. h. man muss auch hier wieder lokal am Ort der jeweiligen Versorgungseinheiten spezielle Bauelemente einsetzen bzw. die bestehenden Bauelemente ersetzen, was kostenintensiv ist und nicht zuletzt aufwändige Elektroinstallationsarbeiten im gesamten Gebäude erfordert.

Aus DE 20 2009 012 554 U1 ist ein System mit einer Zentrale mit einer Zentraleinheit und einer Mehrzahl von Schaltkreisen bekannt, in die jeweils ein nicht adressierbares Bauelement, das mittels der Zentrale steuerbar ist, sowie die Zentraleinheit eingebunden ist. In jedem Schaltkreis ist ein von der Zentraleinheit ansteuerbares Ausgangselement vorgesehen, das der Zentrale zugeordnet und mit einem Ausgang der Zentraleinheit und dem Bauelement verbunden ist. Die Schaltkreise sind zwischen dem Ausgangselement und dem Bauelement für den Betrieb mit Netzwechselspannung und zwischen dem Ausgang und dem Ausgangselement für den Betrieb mit Kleinspannung konfiguriert.

US 2007/0114235 A1 beschreibt ein System gemäß dem Oberbegriff des Anspruches 1.

Aufgabe der vorliegenden Erfindung war die Bereitstellung eines Systems und eines damit ausgeführten Verfahrens zur Steuerung von Funktionseinrichtungen in und/oder im Umfeld von Gebäuden, das unter anderem hinsichtlich des Aufbaus der Zentrale gegenüber DE 20 2009 012 554 U1 weiter vereinfacht ist, und das kostengünstig und flexibel auch in bestehende Gebäude installierbar ist.

### Vortelle der Erfindung

Gegenstand der Erfindung ist ein System zur Steuerung von Funktionseinrichtungen in und/oder im Umfeld von Gebäuden gemäß Anspruch 1, sowie ein Verfahren zur Steuerung von Funktionseinrichtungen in und/oder im Umfeld von Gebäuden gemäß Anspruch 14. Die Unteransprüche betreffen bevorzugte Ausgestaltungen und Weiterbildungen der Erfindung.

Das erfindungsgemäße System kann als universelles Haussteuerungssystern eingesetzt werden, welches mittels einer speicherprogrammierbaren Steuerung, einem oder mehrerer Bedienterminals und vorzugsweise auch einer Wetterstation die elektrischen Verbraucher in einem Gebäude steuert. Das System zeichnet sich dabei besonders dadurch aus, dass es ohne spezielle, (digital) adressierbare Schaltelemente auskommt. Weiter hat es den Vorteil, dass es ohne wesentlichen Installalionsaufwand auch in bestehenden Gebäuden installierbar ist. Dazu müssen lediglich die Zentrale und nach Bedarf an verschiedenen Orten oder Zimmern in dem Gebäude die dezentralen Bedienterminals installiert werden. Daneben kann es, je nach örtlichen Gegebenheiten erforderlich sein, in dem Gebäude Verstärkungselemente bzw. übliche Repeater für die drahtlose Kommunikation der Bedienterminal mit der Zentrale vorzusehen, um die Signalübertragung zu verbessern. Vorteilhaft erfolgt die drahtlose Signalübertragung dabei über die übliche WLAN-Technologie mit einem WLAN-Router, der der Zentrale zugeordnet ist. Die einzelnen Bedienterminals sind vorzugsweise über ein Kabel mit den als Relais ausgestalteten Schaltelementen verbunden. Die Schaltelemente schalten dann wiederum die herkömmlichen elektrischen Schaltkreise für Licht, Elektrogeräte, Überwachungskameras, Bildschirme, Rollläden, Jalousien, Stereoanlagen, Alarmanla-gen usw. bzw. die darin eingebundenen elektrischen Bauelemente bzw. Verbraucher im Gebäude.

Das erfindungsgemäße System und Verfahren hat insbesondere den Vorteil, dass außerhalb der Zentrale weitgehend bzw. sogar ausschließlich auf preiswerte, handelsübliche elektrische Bauelemente zurückgegriffen werden kann, die nicht wie bei bekannten Bussystemen adressierbar sein müssen. Das System ist somit außerhalb der Zentrale ohne busfähige, d. h. letztlich ohne über (digitale) Adressierung steuerbare oder über Adressierung mit der Zentraleeinheit kommunizierende Bauelemente oder Schaltelemente realisierbar. Dadurch kann die Installation von neuen elektrischen Leitungen gering gehalten werden bzw. je nach Ausgangssituation sogar ganz entfallen. In der Regel ist nur die Installation einer zusätzlichen Leitung pro Raum in dem Gebäude erforderlich, die das jeweilige Bedienterminal in dem betreffenden Raum mit dem zu schaltenden Schaltelement verbindet, wobei selbst diese Leitung entfallen kann, wenn das Bedienterminal und das Schaltelement am gleichen Ort im Gebäude angebracht sind.

Das Schaltelement ist vorteilhaft zusammen mit mehreren anderen, mit dem Bedienterminal verbundenen Schaltelementen in einem in oder auf einer Wand montierten Wandelement integriert. Das Wandelement ist mit einem zugeordneten Bedienterminal vorzugsweise über eine elektrische Leitung verbunden bzw. die diesem verkabelt. Eine drahtlose Steuerung der Schaltelemente über durch das jeweilige Bedienterminal und durch das Steuerbauteil, beispielsweise über eine WLAN-Verbindung, ist alternativ zwar auch möglich, gegenüber einer Kabelverbindung aufgrund der meist gegebenen räumlichen Nähe von Bedienterminal und Schaltelement bzw. sogar deren Integration in einem gemeinsamen Bauteil meist aber zu aufwändig bzw. teuer und zudem auch wesentlich störanfälliger.

Vorteilhaft ist weiter, dass das System schon in seiner Konstruktion so ausgelegt ist, dass es flexibel auf die jeweilige Gebäudesituation (Anzahl der Zimmer, Architektur, Außenanlagen, Anwendungsbereiche des Systems usw.) anpassbar ist, ohne dass dazu eine jeweils individuell an das Gebäude angepasste Verschaltung der Zentrale vorgenommen werden muss.

Die erfindungsgemäße Zentrale hat den Vorteil, dass sie standardisiert vorgefertigt und verschaltet werden. Insbesondere kann die Zentrale ein Schaltschrank sein, der universell einsetzbar ist, d. h. in dem keine an das jeweilige Gebäude angepasste Veränderung der elektrischen Installationen und Schaltungen vorgenommen werden muss. Die individuelle Anpassung an das Gebäude kann somit ausschließlich über die Programmierung der Zentrale bzw. die Steuerung durch die Bedienterminals und das optional vorgesehene Hauptterminal erfolgen.

Das Hauptterminal ist in erster Linie aus Gründen der Betriebssicherheit vorgesehen, falls die drahtlose Kommunikation mit den dezentralen Bedienterminals beispielsweise wegen einer Störung nicht gewährleistet ist. Dazu ist das Hauptterminal mit der Zentrale vorzugsweise über eine elektrische Leitung verbunden. In bevorzugter Ausgestaltung der Erfindung ist zudem vorgesehen, dass die von dem Hauptterminal ausgehenden Befehle an die Zentrale haben Priorität haben gegenüber Befehlen von den dezentralen Bedienterminals.

### Zeichnungen

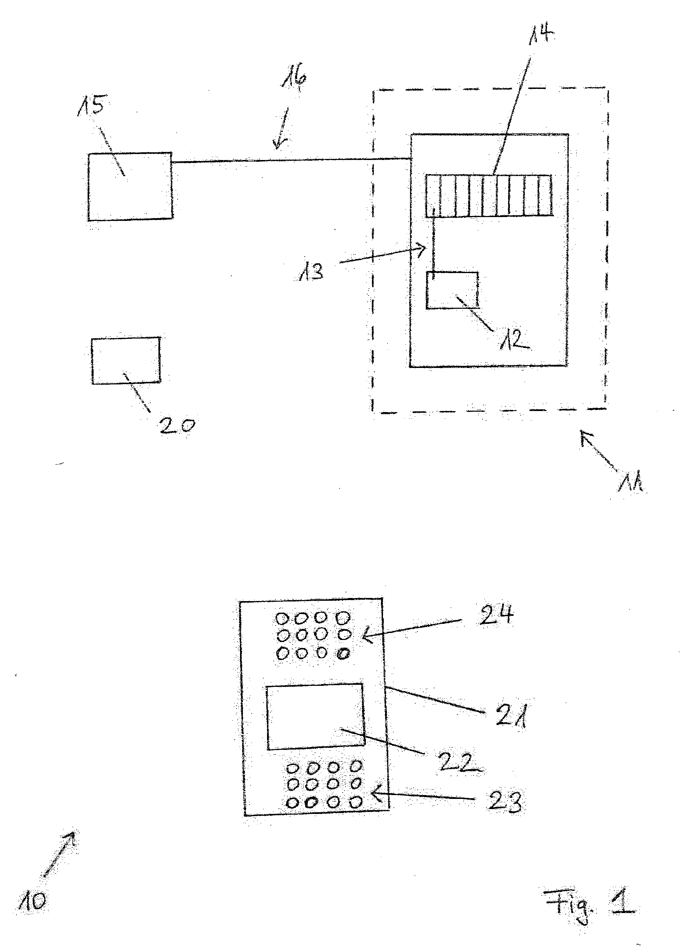

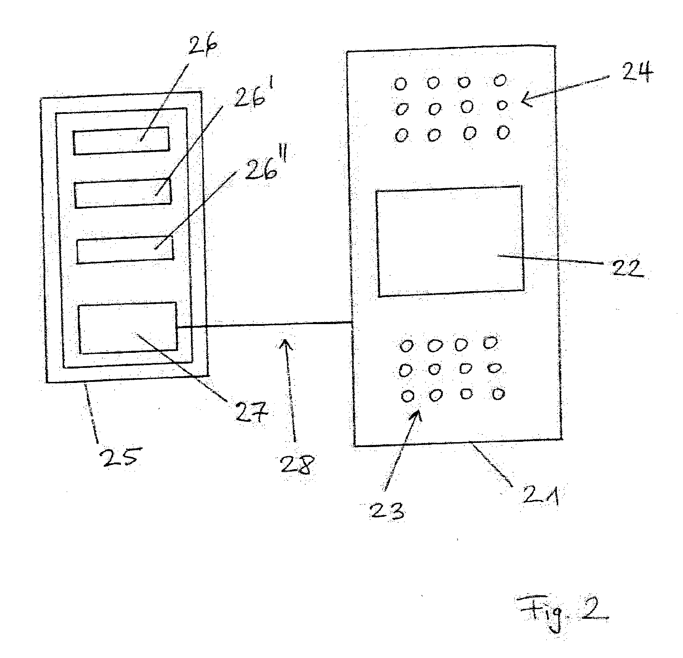

Die Figur 1 zeigt eine Prinzipskizze der Verschaltung und des Zusammenwirkens der einzelnen Komponenten in einem Ausführungsbeispiel des erfindungsgemäßen Systems. Die Figur 2 zeigt eine Prinzipskizze des Zusammenwirkens eines Bedienterminals mit einem zugeordneten Steuerbauteil in einem Wandelement mit Schaltelementen.

### Ausführungsbeispiele

Die Figur 1 zeigt eine Prinzipskizze der Verschaltung und des Zusammenwirkens der einzelnen Komponenten des erfindungsgemäßen Systems 10 mit einer Zentrale 11, einem oder mehreren dezentralen, beispielsweise in verschiedenen Zimmern des Gebäudes angeordneten Bedienterminals 21, einem Steuerbauteil 27 bzw. mehreren Steuerbauteilen 27 falls mehrere Bedienterminals 21 vorgesehen sind, und einer Mehrzahl von jeweils in einen jeweils zugeordneten elektrischen Schaltkreis, vorzugsweise einem 230 Volt Netzwechselspannungsschaltkreis, integrierten Schaltelementen 26, 26', 26", die bevorzugt als über das bzw. die Steuerbauteil(e) 27 steuerbare Relais oder andere steuerbare elektrische Schalter ausgebildet sind, d.h. mit dem Steuerbauteil 27 ist ein gemeinsames oder separates Schalten der Schaltelemente 26, 26', 26" bewirkbar. Die Schaltelemente 26, 26', 26" sind insbesondere nicht als digital adressierbare Schaltelemente 26 ausgebildet. Vorzugsweise ist eine Mehrzahl von Schaltelementen 26, 26', 26" vorgesehen, die jeweils in einen jeweils zugeordneten elektrischen Schaltkreis integriert sind und mittels des Steuerbauteils 27 unabhängig voneinander schaltbar sind.

Die Zentrale 11 weist eine programmierbare Zentraleinheit 14 wie eine CPU oder einen Computer auf, eine mit der Zentraleinheit 14 über eine elektrische Verbindung oder Leitung 13 verbundene Sendeeinrichtung 12 und eine mit der Zentraleinheit 14 über eine elektrische Verbindung oder Leitung 13 verbundene Empfangseinrichtung 12. Vorzugsweise sind die Sendeeinrichtung 12 und die Empfangseinrichtung in einem Bauteil integriert, das einen WLAN-Router umfasst oder ein WLAN-Router ist. Falls die Sendeeinrichtung 12 und die Empfangseinrichtung nicht in einem Bauteil integriert sind, sind sie vorzugsweise beide als WLAN-Router ausgebildet.

Das Bedienterminal 21 und das Steuerbauteil 27 sind zum bidirektionalen Austausch von Informationen zwischen dem Bedienterminal 21 und dem Steuerbauteil 27 vorzugsweise über WLAN oder alternativ über eine Mobilfunktechnologie, Infrarot oder Funk eingerichtet. Dazu sendet die Zentrale 11 beispielsweise über das WLAN Informationen bzw. Befehle an das Bedienterminal 21 und das Bedienterminal 21 sendet Befehle bzw. Informationen über das WLAN an die Zentrale 11. Das Steuerbauteil 27, die Empfangseinrichtung 12 und die Sendeeinrichtung 12 sind somit zum drahtlosen Senden von Informationen von der Sendeeinrichtung 12 an das Steuerbauteil 27 und zum drahtlosen Senden von Informationen von dem Steuerbauteil 27 an die Empfangseinrichtung 12 eingerichtet.

Die Zentrale 11 ist vorzugsweise ein Schaltschrank ist, in dem die programmierbare Zentraleinheit 14, die Sendeeinrichtung 12 und die Empfangseinrichtung 12 angeordnet sind. Dieser Schaltschrank wird in der Regel als vorgefertigtes und vorprogrammiertes Modul bereitgestellt. Die individuelle Programmierung der Zentrale 11, d.h. die Anpassung an das jeweilige Gebäude, kann dann vor Ort mit Hilfe des Hauptterminals 15 oder der einzelnen Bedienterminals 21 erfolgen.

Die Figur 2 zeigt, wie die Schaltelemente 26, 26', 26" insbesondere in Form von Relais in einem in oder auf einer Wand montierbaren Wandelement 25 integriert sind, welches vorzugsweise als übliche Unterputzdose ausgebildet ist. Die einzelnen Schaltelemente 26, 26', 26" sind dabei jeweils in einen dem jeweiligen Schaltelement 26, 26', 26" jeweils zugeordneten elektrischen Schaltkreis eingebunden, der mit beispielsweise 230 Volt (oder auch, je nach Land, 110 Volt oder 380 Volt) Netzwechselspannung, d.h. dem Gebäudespannungsnetz betrieben wird bzw. verbunden ist.

Die bidirektionale drahtlose Kommunikation zwischen dem Bedienterminal 21 und der Sende- bzw. Empfangseinrichtung 12 kann bei Bedarf über einen oder mehrere optional vorgesehenen Repeater 20 (oder Zugangspunkte oder Verstärkungselemente) verstärkt bzw. verbessert werden, die dazu an geeigneten Stellen im Gebäude vorgesehen sind. Die ein oder mehreren Verstärkungselemente 20 sind in das drahtlose Senden von Informationen von der Sendeeinrichtung 12 an das Steuerbauteil 27 und/oder das drahtlose Senden von Informationen von dem Steuerbauteil 27 an die Empfangseinrichtung 12 eingebunden, wie dies von WLAN-Netzwerken bekannt ist.

Die Figur 1 zeigt weiter, dass die Zentrale 11 mit einem Hauptterminal 15 verbunden ist, mit dem die Zentrale gesteuert, überwacht und/oder wahlweise auch programmiert werden kann. Um jederzeit einen Zugriff des Hauptterminals 15 auf die Zentrale gewährleisten zu können, ist das Hauptterminal 15 vorzugsweise über eine elektrische Leitung 16, d.h. nicht drahtlos, mit der Zentrale 11 verbunden. Mit dem Hauptterminal 15 kann auf die Zentraleinheit 14 eingewirkt werden, der Betriebszustand der Zentraleinheit 14 geprüft, die Programmierung der Zentraleinheit 14 geändert oder sogar über die Zentraleinheit 14 und das Steuerbauteil 27 ein Schalten des oder der Schaltelemente 26, 26', 26" bewirkt werden.

An sich ist das Hauptterminal 15 weitgehend analog zu den Bedienterminals 21 ausgebildet, beispielsweise mit einer Dateneingabe oder Steuerung über einen berührungsempfindlichen Bildschirm. Es kann aber aufgrund seiner Priorität im System bzw. seiner Funktion als Notsteuerung weitere Steuer- bzw. Eingabefunktionen, insbesondere zur Änderung der Programmierung der Zentraleinheit 14, haben, die die einzelnen Bedienterminals 21 nicht haben. Andererseits ist die im Weiteren noch erläuterte Sprachsteuerung oder Sprachausgabe der Bedienterminals 21 für das Hauptterminal 15 im Regelfall nicht vorgesehen.

Vorzugsweise weist das Hauptterminal 15 ein berührungsempfindliches Display zur Eingabe von Informationen an die Zentraleinheit 14 und/oder zur Wiedergabe von Informationen wie Fehlermeldungen, Statusmeldungen usw. von der Zentraleinheit 14 auf.

Die Figur 1 zeigt auch die Vorderseite eines Bedienterminals 21, das vorzugsweise einen üblichen berührungsempfindlichen Bildschirm (Touchscreen) 22, ein Sprachausgabeelement 24, d.h. in der Regel einen Lautsprecher, und ein Spracheingabeelement 23, d.h. in der Regel ein Mikrofon, aufweist. 14. Über das berührungsempfindliche Display 22 können Befehle an das Steuerbauteil 27 und darüber an die Zentrale 11 eingegeben werden und/oder Informationen oder Befehle von der Zentrale 11 an das Steuerbauteil 27 wiedergegeben bzw. angezeigt werden.

Die Figur 2 zeigt, dass das Bedienterminal 21 gemäß Figur 1 über eine elektrische Leitung 28 oder ein Kabel mit dem Wandelement 25 verbunden ist. In den Beispiel gemäß Figur 2 ist in das Wandelement 25 auch das Steuerbauteil 27 integriert, mit dem die Schaltelemente 26, 26', 26" gesteuert werden, und das seinerseits sowohl mit dem Bedienterminal 21 als auch mit der Zentrale 11 in Verbindung steht. Erfindungsgemäß ist somit vorgesehen, dass die Schaltelemente 26, 26', 26' nicht direkt von der Zentrale 11 gesteuert werden, sondern stets über das Bedienterminal 21 und das Steuerbauteil 27, wobei das Steuerbauteil 27 und die Zentrale 11 zum bidirektionalen Datenaustausch drahtlos miteinander verbunden sind, und wobei von dem Bedienterminal 21 ausgehende Befehle zur Steuerung eines Schaltelementes 26, 26', 26" in einem elektrischen Schaltkreis zunächst an die Zentrale 11 übermittelt werden, dort überprüft, modifiziert oder freigegeben werden, und dann von der Zentrale 11 an das Steuerbauteil 27 gehen, das dann erst ein Schaltelement 26, 26', 26" schaltet.

Alternativ kann vorgesehen sein, dass das Steuerbauteil 27 in dem Bedienterminal 21 integriert oder diesem zumindest räumlich zugeordnet ist und über eine oder mehrere elektrische Leitungen mit den Schaltelementen 26, 26', 26" verbunden ist. Diese Ausführungsform ist besonders vorteilhaft, weil damit die Montage des erfindungsgemäßen Systems einfacher und noch weiter in vorgefertigten Modulen erfolgen kann. Insbesondere kann so ein Steuerbauteil 27 auch mit mehreren Wandelementen 25 oder Schaltelementen 26, 26', 26" über nur eine elektrische Leitung 28 (mit einer entsprechenden Zahl von Adern) verbunden sein. Das Wandelement 25 ist in diesem Fall lediglich beispielsweise eine Dose zum Einbau in einer Wand eines Gebäudes, wie sie für Schalter- oder Steckerleisten üblich sind, die die Schaltelemente 26, 26', 26" beinhaltet, die wiederum in die jeweiligen Netzwechselspannungsschaltkreise eingebunden sind und über das Steuerbauteil 27 geschaltet werden. Bei dieser Ausführungsform ist das Bedienterminal 21 ein vorgefertigtes Modul, das beispielsweise auf die Wand in einem Gebäude montiert werden kann, und in das das Steuerelement 27 integriert ist. Ein direktes Schalten der Schaltelemente 26, 26', 26" über das Steuerelement 27 mittels des Bedienterminals 21 ohne die Zentrale 11 ist aber auch in diesem Fall nicht vorgesehen, d.h. die Kommunikation verläuft stets von dem Bedienterminal 21 an die Zentrale 11 und von der Zentrale 11 an das Bedienterminal 21 und darüber an das Steuerelement 27, oder direkt von der Zentrale 11 an das Steuerelement 27 bzw. von dem Steuerelement 27 an die Zentrale 11.

Vorzugsweise weist das Wandelement 25 eine Mehrzahl von Schaltelementen 26, 26', 26" auf, die jeweils in einen zugeordneten elektrischen Schaltkreis integriert sind und mittels des Steuerbauteils 27 unabhängig voneinander schaltbar sind.

Das Bedienterminal 21 weist, wie erläutert, vorzugsweise ein Spracheingabeelement 23 auf, mit dem als Sprache von dem Spracheingabeelement 23 empfangene Sprachinformationen über das Steuerbauteil 27 an die Zentrale 11 in Form von elektrischen Signalen übermittelbar sind.

Weiter weist das Bedienterminal 21 vorzugsweise auch ein Sprachausgabelement 24 auf, mit dem von der Zentrale 11 über das Steuerbauteil 27 kommende Informationen bzw. elektrische Signale als Sprache wiedergebbar sind.

Die Zentrale weist dazu vorzugsweise eine Sprachanalyseeinheit auf, mit der die von dem Steuerbauteil 27 an die Zentraleinheit 11 übermittelten Informationen bzw. Signale, d.h. die in elektrische Signale überführten Sprachinformationen, hinsichtlich der Bedeutung der jeweiligen Sprachinformationen, d.h. semantisch, auswertbar sind.

Auf der Grundlage der Auswertung der eingehenden Sprachinformationen bzw. elektrischen Signale ergreift die Zentrale 11 dann die gewünschten Maßnahmen, d.h. übermittelt beispielsweise einen Befehl an ein Steuerbauteil 27, ein Schaltelement 26, 26', 26" zu schalten, so dass beispielsweise ein zunächst sprachlich geäußerter Musikwunsch bzw. Musiktitel von der Stereoanlage abgespielt wird, bei dem Kommando "Markise schließen" die Markise ausgefahren wird, bzw. bei einem entsprechenden Kommando der Rasen gewässert oder ein Fenster geschlossen wird.

Vorzugsweise weist die Zentrale 11 auch eine Sprachgeneriereinheit auf, mit der in elektrische Signale kodierte Sprachinformationen von der Zentraleinheit 11 über das Steuerbauteil 27 an das Spracheingabeelement 23 übermittelt und von dem Sprachausgabeelement 23 dann als für einen Nutzer verständliche Sprache wiedergegeben werden.

In bevorzugter Ausgestaltung des erfindungsgemäßen Systems ist vorgesehen, dass die Zentrale 11 oder das Hauptterminal 15 mindestens eine Kommunikationsschnittstelle aufweist, über die extern mit einem Kommunikationsmittel, insbesondere mittels Internet oder einem internetfähigen Mobilfunktelefon, auf die Zentraleinheit 14 eingewirkt werden kann, der Betriebszustand der Zentraleinheit 14 geprüft, die Programmierung der Zentraleinheit 14 geändert oder über das Steuerbauteil 27 ein Schalten eines elektrischen Schaltelementes 26, 26', 26" bewirkt werden kann.

In bevorzugtrer Ausgestaltung des erfindungsgemäßen Systems ist vorgesehen, dass die Zentraleinheit 11 oder das Hauptterminal 15 mindestens eine Kommunikationsschnittstelle aufweist, über die die Zentraleinheit 14 eine Information oder ein Signal, insbesondere über den Betriebszustand der Zentraleinheit 14, die Progammierung der Zentraleinheit 14 oder eine Alarmierung, einem externen Kommunikationsmittel, insbesondere einem Computer, dem Internet oder einem internetfähigen Mobilfunktelefon, übermitteln kann.

Vorzugsweise ist in einem Gebäude und/oder im Umfeld eines Gebäudes eine Mehrzahl von Bedienterminals 21 mit jeweils mindestens einem jedem Bedienterminal 21 jeweils zugeordneten Steuerbauteil 27 vorgesehen, wobei jedem der Steuerbauteile 27 wiederum ein oder mehrere Schaltelemente 26, 26', 26" zugeordnet sind. Somit kann auch ein bzw. wird häufig beispielsweise ein von einem ersten Bedienterminal 21 in einem ersten Raum eines Gebäudes ausgehender Befehl zunächst an die Zentrale 11 gehen, wobei die Zentrale 11 dann einen Befehl an ein beispielsweise in einem zweiten Raum des Gebäudes befindliches anderes Bedienterminal 21 oder ein diesem anderen Bedienterminal 21 zugeordnetes Steuerbauteil 27 übermittelt, das schließlich ein Schaltelement 26, 26', 26" schaltet.

In bevorzugter Ausgestaltung der Erfindung weist die Zentrale 11 eine Auswerteeinheit auf, mit der in dem Fall, dass mindestens zwei Bedienterminals 21 annähernd gleichzeitig eine zumindest im Wesentlichen gleiche Sprachinformation in Form von elektrischen Signalen an die Zentraleinheit 14 übermitteln, feststellbar ist, welches Bedienterminal 21 die als Sprache von dem Spracheingabeelement 23 des jeweiligen Bedienterminals 21 jeweils empfangene Sprachinformationen zuerst empfangen hat. Dies ist vor allem dann wichtig, wenn in einem Raum eines Gebäudes zwei oder mehr Bedienterminals 21 vorgesehen ist, die über Sprache gesteuert werden, so dass es wichtig ist festzustellen, welches Bedienterminal 21 von dem Nutzer wohl jeweils angesprochen wurde.

Alternativ oder ergänzend zu der Analyse des Zeitpunktes, wann eines von mehreren Bedienterminals 21 die als Sprache von dem Spracheingabeelement 23 des jeweiligen Bedienterminals 21 empfangene Sprachinformationen empfangen hat, kann die Auswerteeinheit in der Zentrale 11 auch die Lautstärke der von den Bedienterminals 21 empfangenen Sprache auswerten und so ermitteln, welches Bedienterminal 21 von dem Nutzer wohl jeweils angesprochen wurde. In dem Fall, dass mindestens zwei Bedienterminals 21 gleichzeitig oder annähernd gleichzeitig eine zumindest im Wesentlichen gleiche Sprachinformation in Form von elektrischen Signalen an die Zentraleinheit 14 übermitteln, wird somit mit der Auswerteeinheit in der Zentrale 11 ermittelt, welches Bedienterminal 21 die als Sprache von dem Spracheingabeelement 23 des jeweiligen Bedienterminals 21 jeweils empfangene Sprachinformationen mit höherer Lautstärke empfangen hat.

Zusammenfassend erfolgt mit dem erfindungsgemäßen System die von einem Bedienterminal 21 veranlasste Schaltung eines Schaltelementes 26, 26', 26" unter Einbeziehung der Zentraleinheit 14 und des dem jeweiligen Schaltelement 26, 26', 26" zugeordneten Steuerbauteils 27. Somit wird mit dem Bedienterminal 21 in der Regel oder sogar nie eine direkte Schaltung eines Schaltelemente 26, 26', 26" ohne Einbeziehung der Zentraleinheit 14 und des dem jeweiligen Schaltelement 26 zugeordneten Steuerbauteils 27 vorgenommen. Andererseits wird auch mit der Zentraleinheit 11 in der Regel oder sogar nie eine direkte Schaltung eines Schaltelementes 26, 26', 26" ohne Einbeziehung des dem jeweiligen Schaltelement 26 zugeordneten Steuerbauteils 27 vorgenommen. Die eingesetzten Schaltelemente 26, 26', 26" müssen daher keine (digital) adressierbare Schaltelemente sein.

### Bezugszeichenliste

- 10: System
- 11: Zentrale
- 12: Sendeeinrichtung/Empfangseinrichtung (gemeinsames Bauteil)
- 13: elektrische Leitung
- 14: Zentraleinheit (CPU, Computer)
- 15: Hauptterminal
- 16: elektrische Leitung
- 20: Verstärkungselement (Access Point, Repeater)
- 21: Bedienterminal
- 22: berührungsempfindliches Display (Touchscreen)
- 23: Spracheingabeelement (Mikrofon)
- 24: Sprachausgabelement (Lautsprecher)
- 25: Wandelement
- 26: Schaltelement (Relais)
- 26': Schaltelement (Relais)
- 26": Schaltelement (Relais)
- 27: Steuerbauteil
- 28: elektrische Leitung

## Patentansprüche

1. System zur Steuerung von Funktionseinrichtungen in und/oder im Umfeld von Gebäuden, wobei das System (10) eine Zentrale (11), ein Bedienterminal (21) und ein Steuerbauteil (27) aufweist, wobei die Zentrale (11) eine programmierbare Zentraleinheit (14), eine mit der Zentraleinheit (14) verbundene Sendeeinrichtung (12) und eine mit der Zentraleinheit (14) verbundene Empfangseinrichtung (12) aufweist, und wobei das Steuerbauteil (27), die Empfangseinrichtung (12) und die Sendeeinrichtung (12) zum drahtlosen Senden von Informationen von der Sendeeinrichtung (12) an das Steuerbauteil (27) und zum drahtlosen Senden von Informationen von dem Steuerbauteil (27) an die Empfangseinrichtung (12) eingerichtet sind, **dadurch gekennzeichnet, dass** das System ein in einen elektrischen Schaltkreis integriertes Schaltelement (26, 26', 26") aufweist, wobei mit dem Steuerbauteil (27) ein Schalten des Schaltelementes (26, 26', 26") bewirkbar ist, wobei das Bedienterminal (21) und das Steuerbauteil (27) zum bidirektionalen Austausch von Informationen zwischen dem Bedienterminal (21) und dem Steuerbauteil (27) eingerichtet sind, und wobei das System so eingerichtet ist, dass eine von dem Bedienterminal (21) veranlasste Schaltung des Schaltelementes (26, 26', 26") stets und nur unter Einbeziehung der Zentraleinheit (14) und des dem jeweiligen Schaltelement (26, 26', 26") zugeordneten Steuerbauteils (27) erfolgt.

2. System nach Anspruch 1, **dadurch gekennzeichnet, dass** das Schaltelement (26, 26', 26") in einem in oder auf einer Wand montierbaren Wandelement (25) integriert sind.

3. System nach Anspruch 1 oder 2, **dadurch gekennzeichnet, dass** das Steuerbauteil (27) in das Wandelement (25) integriert ist.

4. System nach Anspruch 1, 2 or 3, **dadurch gekennzeichnet, dass** das Steuerbauteil (27) in das Bedienterminal (21) integriert oder diesem räumlich zugeordnet ist.

5. System nach mindestens einem der vorangehenden Ansprüche, **dadurch gekennzeichnet, dass** das Steuerbauteil (27) mittels einer Kabelverbindung (28) mit dem Bedienterminal (21) verbunden ist.

6. System nach mindestens einem der vorangehenden Ansprüche, **dadurch gekennzeichnet, dass** ein Hauptterminal (15) vorgesehen ist, das über eine elektrische Leitung (16) mit der Zentrale (11) verbunden ist, wobei das Hauptterminal (15) insbesondere ein berührungsempfindliches Display zur Eingabe von Informationen an die Zentraleinheit (14) und/oder zur Wiedergabe von Informationen von der Zentraleinheit (14) aufweist.

7. System nach mindestens einem der vorangehenden Ansprüche, **dadurch gekennzeichnet, dass** das Bedienterminal (21) ein berührungsempfindliches Display (22) zur Eingabe von Informationen an das Steuerbauteil (27) und/oder zur Wiedergabe von Informationen von dem Steuerbauteil (27) aufweist.

8. System nach mindestens einem der vorangehenden Ansprüche, **dadurch gekennzeichnet, dass** das Bedienterminal (21) ein Spracheingabeelement (23) aufweist, mit dem als Sprache von dem Spracheingabeelement (23) empfangene Sprachinformationen als elektrische Signale über das Steuerbauteil (27) an die Zentrale (11) übermittelbar sind.

9. System nach mindestens einem der vorangehenden Ansprüche, insbesondere nach Anspruch 8, **dadurch gekennzeichnet, dass** das Bedienterminal (21) ein Sprachausgabelement (24) aufweist, mit dem von der Zentrale (11) über das Steuerbauteil (27) kommende elektrische Signale als Sprache wiedergebbar sind.

10. System nach mindestens einem der vorangehenden Ansprüche, **dadurch gekennzeichnet, dass** die Zentrale (11) eine Sprachanalyseeinheit aufweist, mit der in elektrische Signale überführte Sprachinformationen, die von dem Steuerbauteil (27) an die Zentraleinheit (11) übermittelt werden, hinsichtlich der sprachlichen Bedeutung der Sprachinformationen auswertbar sind.

11. System nach mindestens einem der vorangehenden Ansprüche, insbesondere nach Anspruch 10, **dadurch gekennzeichnet, dass** die Zentrale (11) eine Sprachgeneriereinheit aufweist, mit der Sprachinformationen in Form von elektrischen Signalen generierbar sind, die von der Zentraleinheit (11) über das Steuerbauteil (27) an das Sprachausgabeelement (23) übermittelbar und von dem Sprachausgabeelement (23) als Sprache wiedergebbar sind.

12. System nach mindestens einem der vorangehenden Ansprüche, **dadurch gekennzeichnet, dass** die Zentrale (11) eine Auswerteeinheit aufweist, mit der in dem Fall, dass mindestens zwei Bedienterminals (21) annähernd gleichzeitig eine zumindest im Wesentlichen gleiche Sprachinformation in Form von elektrischen Signalen an die Zentraleinheit (14) übermitteln, feststellbar ist, welches Bedienterminal (21) die als Sprache von dem Spracheingabeelement (23) des jeweiligen Bedienterminals (21) jeweils empfangene Sprachinformationen zuerst empfangen hat.

13. System nach mindestens einem der vorangehenden Ansprüche, insbesondere nach Anspruch 12, **dadurch gekennzeichnet, dass** die Zentrale (11) eine Auswerteeinheit aufweist, mit der in dem Fall, dass mindestens zwei Bedienterminals (21) gleichzeitig oder annähernd gleichzeitig eine zumindest im Wesentlichen gleiche Sprachinformation in Form von elektrischen Signalen an die Zentraleinheit (14) übermitteln, feststellbar ist, welches Bedienterminal (21) die als Sprache von dem Spracheingabeelement (23) des jeweiligen Bedienterminals (21) jeweils empfangene Sprachinformationen mit höherer Lautstärke empfangen hat.

14. Verfahren zur Steuerung von Funktionseinrichtungen in und/oder im Umfeld von Gebäuden mit einem System nach mindestens einem der vorangehenden Ansprüche.

15. Verfahren nach Anspruch 14, **dadurch gekennzeichnet, dass** mit dem Bedienterminal (21) keine direkte Schaltung des oder der Schaltelemente (26) ohne Einbeziehung der Zentraleinheit (14) und des dem jeweiligen Schaltelement (26) zugeordneten Steuerbauteils (27) erfolgt, und/oder dass mit der Zentraleinheit (11) keine direkte Schaltung des oder der Schaltelemente (26) ohne Einbeziehung des dem jeweiligen Schaltelement (26) zugeordneten Steuerbauteils (27) erfolgt.

## Claims

1. A system for controlling function devices in and/or in the environment of buildings, wherein the system (10) has a centre (11), a control terminal (21) and a control member (27), wherein the centre (11) includes a programmable central unit (14), a transmission means (12) connected with the central unit (14) and a receiving means (12) connected with the central unit (14), and wherein the control member (27), the receiving means (12) and the transmission means (12) are equipped for wirelessly transmitting information from the transmission means (12) to the control member (27) and for wirelessly transmitting information from the control member (27) to the receiving means (12), **characterised in that** the system comprises a switch element (26, 26', 26") integrated in an electric circuit, wherein a switching of the switch element (26, 26', 26") is effectable with the control member (27), wherein the control terminal (21) and the control member (27) are equipped for bidirectional exchange of information between the control terminal (21) and the control member (27), and wherein the system is configured such that a switching of the switch element (26, 26', 26") caused by the control terminal (21) is effected always and only with involvement of the central unit (14) and the control member (27) assigned to the respective switch element (26, 26', 26").

2. System according to claim 1, **characterised in that** the switch element (26, 26', 26") is integrated in a wall element (25) mountable in or on a wall.

3. System according to claim 1 or 2, **characterised in that** the control member (27) is integrated in the wall element (25).

4. System according to claim 1, 2 or 3, **characterised in that** the control member (27) is integrated in the control terminal (21) or spatially associated with it.

5. System according to at least one of the preceding claims, **characterised in that** the control member (27) is connected with the control terminal (21) via a cable connection (28).

6. System according to at least one of the preceding claims, **characterised in that** a main terminal (15) is provided which is connected to the centre (11) via an electric line (16), in particular wherein the main terminal (15) comprises a touch-sensitive display for inputting information to the central unit (14) and/or for reproducing information from the central unit (14).

7. System according to at least one of the preceding claims, **characterised in that** the control terminal (21) comprises a touch-sensitive display (22) for inputting information to the control member (27) and/or for reproducing information from the control member (27).

8. System according to at least one of the preceding claims, **characterised in that** the control terminal (21) comprises a speech input element (23) with which speech information received as speech by the speech input element (23) can be transmitted as electric signals via the control member (27) to the centre (11).

9. System according to at least one of the preceding claims, in particular according to claim 8, **characterised in that** the control terminal (21) comprises a speech output element (24) with which electric signals arriving from the centre (11) via the control member (27) can be reproduced as speech.

10. System according to at least one of the preceding claims, **characterised in that** the centre (11) comprises a speech analysis unit with which speech information converted into electric signals which are transmitted from the control member (27) to the central unit (11) can be evaluated with regard to the linguistic meaning of the speech information.

11. System according to at least one of the preceding claims, in particular according to claim 10, **characterised in that** the centre (11) has a speech generating unit with which speech information can be generated in the form of electric signals which can be transmitted from the central unit (11) via the control member (27) to the speech output element (23) and which can be reproduced as speech by the speech output element (23).

12. System according to at least one of the preceding claims, **characterised in that** the centre (11) has an evaluation unit with which, in case that at least two control terminals (21) transmit approximately at the same time an at least substantially same speech information in the form of electric signals to the central unit (14), it can be determined which control terminal (21) received first the respective speech information which has been received as speech by the speech input element (23) of the respective control terminal (21).

13. System according to at least one of the preceding claims, in particular according to claim 12, **characterised in that** the centre (11) has an evaluation unit with which, in case that at least two control terminals (21) transmit at the same time or approximately at the same time an at least substantially same speech information in the form of electric signals to the central unit (14), it can be determined which control terminal (21) received the respective speech information which has been received as speech by the speech input element (23) of the respective control terminal (21) with higher volume.

14. Method for controlling function devices in and/or in the environment of buildings with a system according to at least one of the preceding claims.

15. Method according to claim 14, **characterised in that** with the control terminal (21) no direct switching of the one or more switch elements (26) without involvement of the central unit (14) and the control member (27) assigned to the respective switch element (26) is performed, and/or that with the central unit (11) no direct switching of the one or more switch elements (26) without involvement of the control member (27) assigned to the respective switch element (26) is performed.

## Revendications

1. Système de commande de dispositifs de fonctionnement à l'intérieur et/ou dans l'environnement de bâtiments, dans lequel le système (10) comporte un centre (11), un terminal de commande (21) et un élément de commande (27), dans lequel le centre (11) comporte une unité centrale programmable (14), un dispositif d'émission (12) reliée à l'unité centrale (14) et un dispositif de réception (12) reliée à l'unité centrale (14), et dans lequel l'élément de commande (27), le dispositif de réception (12) et le dispositif d'émission (12) sont agencés pour l'émission sans fil d'informations du dispositif d'émission (12) au élément de commande (27) et pour l'émission sans fil d'informations du élément de commande (27) au dispositif de réception (12), **caractérisé en ce que** le système comporte un élément de commutation (26, 26', 26") intégré dans un circuit électrique, dans lequel une commutation du élément de commutation (26, 26', 26") peut être apportée avec l'élément de commande (27), dans lequel le terminal de commande (21) et l'élément de commande (27) sont disposés pour un échange bidirectionnel d'informations entre le terminal de commande (21) et l'élément de commande (27), et dans lequel le système est disposé de telle sorte qu'une commutation du élément de commutation (26, 26', 26") initiée par le terminal de commande (21) est effectuée toujours et seulement sous l'inclusion de l'unité centrale et du élément de commande (27) associé avec l'élément de commutation (26, 26', 26") respectif.

2. Système selon la revendication 1, **caractérisé en ce que** l'élément de commutation (26, 26', 26") est intégré dans un élément de paroi (25) pouvant être monté dans la paroi ou sur la paroi.

3. Système selon la revendication 1 ou 2, **caractérisé en ce que** l'élément de commande (27) est intégré dans l'élément de paroi (25).

4. Système selon la revendication 1, 2 ou 3, **caractérisé en ce que** l'élément de commande (27) est intégré dans le terminal de commande (21) ou est associé dans l'espace à celui.

5. Système selon au moins l'une des revendications précédentes, **caractérisé en ce que** l'élément de commande (27) est relié par une connexion par câble (28) avec le terminal de commande (21).

6. Système selon au moins l'une des revendications précédentes, **caractérisé en ce qu'**un terminal principal (15) est prévu qui est relié à l'intermédiaire d'une ligne électrique (16) avec le centre (11), ledit terminal principal (15) comportant en particulier un dispositif de visualisation tactile pour la saisie d'informations à l'unité centrale (14) et/ou pour la reproduction d'informations de l'unité centrale (14).

7. Système selon au moins l'une des revendications précédentes, **caractérisé en ce que** le terminal de commande (21) comporte un dispositif de visualisation tactile (22) pour la saisie d'informations au élément de commande (27) et/ou pour la reproduction d'informations du élément de commande (27).

8. Système selon au moins l'une des revendications précédentes, **caractérisé en ce que** le terminal de commande (21) comporte un élément d'entrée de parole (23) avec lequel des informations de parole reçues en tant que parole du élément d'entrée (23) peuvent être transmises en tant que signaux électriques à l'intermédiaire du élément de commande (27) vers le centre (11).

9. Système selon au moins l'une des revendications précédentes, en particulier selon la revendication 8, **caractérisé en ce que** le terminal de commande (21) comporte un élément d'émission de parole (24) avec lequel des signaux électriques arrivant du centre (11) à l'intermédiaire du élément de commande (27) peuvent être reproduits sous forme de parole.

10. Système selon au moins l'une des revendications précédentes, **caractérisé en ce que** le centre (11) comporte une unité d'analyse de parole avec laquelle des informations de parole converties en signaux électriques qui sont transférées du l'élément de commande (27) à l'unité centrale (11) peuvent être évaluées en ce qui concerne la signification linguistique des informations de parole.

11. Système selon au moins l'une des revendications précédentes, en particulier selon la revendication 10, **caractérisé en ce que** le centre (11) comporte une unité de génération de parole avec laquelle des informations de parole sous forme de signaux électriques peuvent être générées, qui peuvent être transmises du centre (11) à l'intermédiaire du élément de commande (27) au élément d'émission de parole (24) et peuvent être reproduites sous forme de parole par l'élément d'émission de parole (23).

12. Système selon au moins l'une des revendications précédentes, **caractérisé en ce que** le centre (11) comporte une unité d'évaluation avec laquelle, dans le cas où au moins deux terminaux de commande (21) transmettent approximativement au même moment au moins sensiblement la même information de parole sous forme de signaux électriques à l'unité centrale (14), on peut déterminer lequel terminal de commande (21) a reçu d'abord l'information de parole respectif en tant que parole reçue du élément d'entrée de parole (23) du terminal de commande (21) respectif.

13. Système selon au moins l'une des revendications précédentes, en particulier selon la revendication 12, **caractérisé en ce que** le centre (11) comporte une unité d'évaluation avec laquelle, dans le cas où au moins deux terminaux de commande (21) transmettent approximativement au même moment au moins sensiblement la même information de parole sous forme de signaux électriques à l'unité centrale (14), on peut déterminer lequel terminal de commande (21) a reçu l'information de parole respectif en tant que parole reçue du élément d'entrée de parole (23) du terminal de commande (21) respectif avec un volume plus fort.

14. Procédé pour la commande de dispositifs de fonctionnement à l'intérieur et/ou dans l'environnement de bâtiments avec un système selon au moins l'une des revendications précédentes.

15. Procédé selon la revendication 14, **caractérisé en ce que** le terminal de commande (21) n'effectue aucune commutation directe de la ou des éléments de commutation (26) sans implication de l'unité centrale (14) et du élément de commande (27) associé avec l'élément de commutation (26) respectif, et/ou **en ce que** avec le centre (11) n'aucune commutation directe de la ou des éléments de commutation (26) est effectué sans implication du élément de commande (27) associé avec l'élément de commutation (26) respectif.
